# EUROPÄISCHE PATENTSCHRIFT

(11) **EP 2 780 614 B1**
(45) Veröffentlichungstag und Bekanntmachung des Hinweises auf die Patenterteilung: **06.01.2016**
(21) Anmeldenummer: 12759362.2
(22) Anmeldetag: 21.08.2012
(51) Int. Cl.: F16K 31/163, F16K 31/528, F15B 15/06

(54) **BETÄTIGUNGSVORRICHTUNG FÜR EINEN DREHBAREN VERSCHLUSSTEIL EINES VENTILS**
ACTUATING DEVICE FOR A ROTATABLE CLOSURE PART OF A VALVE
DISPOSITIF D'ACTIONNEMENT D'UN ÉLÉMENT DE FERMETURE ROTATIVE D'UNE VANNE

(30) Priorität: 20.10.2011 DE 102011116627
(43) Veröffentlichungstag der Anmeldung: 24.09.2014
(73) Patentinhaber: GEA Tuchenhagen GmbH, 21514 Büchen (DE)
(72) Erfinder: BURMESTER, Jens, 23883 Grambek (DE); SÜDEL, Matthias, 23626 Ratekau (DE)
(74) Vertreter: Mönkemeyer, Philipp
(86) Internationale Anmeldenummer: PCT/EP2012/003541
(87) Internationale Veröffentlichungsnummer: WO 2013/056761

(56) Entgegenhaltungen:
- EP-A2- 0 599 770
- DE-A1- 2 817 260
- DE-T2-602004 001 988

## Beschreibung

### TECHNISCHES GEBIET

Die Erfindung betrifft Betätigungsvorrichtung für einen drehbaren Verschlussteil eines Ventils, insbesondere einen pneumatisch oder hydraulisch betätigbaren Drehantrieb für ein Scheiben- oder Drosselklappenventil, mit einem Gehäuse, in dem ein gegen einen zylindrischen Gehäusemantel abgedichteter, einseitig mit einem Druckmittel beaufschlagbarer Antriebskolben angeordnet ist, der vorzugsweise einen rohrförmigen Kolbenschaft aufweist, mit einer Antriebswelle, die einseitig aus dem Gehäuse herausgeführt ist und mittelbar oder unmittelbar den Verschlussteil drehend antreibt, wobei der Antriebskolben entweder bei einseitiger Beaufschlagung mit dem Druckmittel eine axiale Verschiebebewegung gegen die Wirkung wenigstens einer Rückstellfeder oder bei wechselseitiger Beaufschlagung mit einem Druckmittel eine hin- und hergehende Verschiebebewegung ausführt, wobei der Kolbenschaft über wenigstens eine in ihm ausgebildete axiale Nut, in die ein mit dem Gehäuse fest verbundener Geradführungs-Nocken eingreift, eine axial orientierte Führung in dem Gehäuse erfährt und wobei der Kolbenschaft wenigstens eine in ihm angeordnete wendelförmige Nut aufweist, in die ein an oder in der Antriebswelle fest angeordneter Mitnehmerbolzen eingreift, sodass die radial und axial gelagerte Antriebswelle durch die in Richtung ihrer Drehachse orientierte axiale Verschiebebewegung des Antriebskolbens eine Drehung um die Drehachse erfährt.

### STAND DER TECHNIK

Eine Betätigungsvorrichtung der gattungsgemäßen Art (auch kurz als Drehantrieb bezeichnet), bei der ein Antriebskolben bei einseitiger Beaufschlagung mit einem Druckmittel eine axiale Verschiebebewegung gegen die Wirkung wenigstens einer Rückstellfeder ausführt, ist in der EP 0 599 770 A2 beschrieben. In einem mit dem Antriebskolben lösbar verbundenen rohrförmigen Kolbenschaft sind zur Geradführung des Antriebskolbens zwei diametral zueinander angeordnete axiale Nuten und zur Erzeugung der Drehbewegung der Antriebswelle eine einzige gegen die axiale Bewegungsrichtung des Antriebskolbens geneigte Kurvenführungsnut angeordnet. Die Antriebswelle ist einseitig über einen Boden eines Gehäuses der Betätigungsrichtung in die Umgebung herausgeführt, und an diesem Boden ist ein rohrförmiger Lagerkörper fest angeordnet, der in das Gehäuse hineinragt und der endseitigen Lagerung und Führung des Kolbenschaftes dient. In dem dem Boden abgewandten endseitigen Bereich der Lagerhülse ist in dieser ein Querbolzen verankert, der die Lagerhülse von der einen zur anderen Seite radial durchdringt und dabei durch die beiden axialen Nuten des Kolbenschaftes hindurchgreift. Die Antriebswelle ist einerseits in dem von ihr durchdrungenen Boden radial und, in Richtung zu ihrem umgebungsseitigen Wellenende hin, axial gelagert und andererseits findet sie ihre radiale Lagerung an der Innenseite des rohrförmigen Kolbenschaftes, der auf der Antriebswelle axial verschieblich ist. Eine axiale Lagerung in Richtung zum Antriebskolben hin findet die Antriebswelle an dem Querbolzen. In der Antriebswelle ist ein radial orientierter Stift fest verankert, der in die Kurvenführungsnut im Kolbenschaft eingreift.

Die Bewegungskinematik der bekannten Betätigungsvorrichtung wird zwar mit relativ einfachen Mitteln verwirklicht, jedoch gelingt dies nur um den Preis einer wenig stabilen und ungenauen antriebskolbenseitigen radialen Lagerung der Antriebswelle. Diese radiale Lagerung erfolgt mittelbar in der Lagerhülse, und zwar über den rohrförmigen Kolbenschaft, wobei der Kolbenschaft selbst mit dem Antriebskolben lösbar verbunden ist und wegen seiner axialen Hin- und Herbewegung radial außenseits gegenüber der Lagerhülse und radial innenseits gegenüber der Antriebswelle jeweils mit hinreichendem Spiel gefügt ist. Darüber hinaus erfolgt die Drehwinkelbegrenzung der Antriebswelle hubabhängig und damit ungenau, da die Hubbewegung des Antriebskolbens oder des mit ihm verbundenen Kolbenschaftes durch nicht offenbarte Anschlägen und nicht die Drehbewegung begrenzt ist.

Die FR 2 236 103 A1 beschreibt einen Drehantrieb mit einer Kinematik, die grundsätzlich jener der EP 0 599 770 A2 entspricht. Allerdings erfolgt die Rückstellung des Antriebskolbens nicht durch eine Rückstellfeder, sondern dieser ist beidseitig druckmittelbeaufschlagt, und die Antriebswelle ist an den beiden Gehäusestirnflächen aus dem Gehäuse des Drehantriebs herausgeführt.

Eine Betätigungsvorrichtung für ein drehbares Verschlussstück eines Ventils ist in der DE 33 03 872 C2 oder in der Zusatzanmeldung zu dieser **(**DE 33 15 244 A1**)** beschrieben. Im Kolben der erstgenannten Betätigungsvorrichtung ist eine einzige Kurvenführung und im Kolben der zweigenannten sind zwei einander gegenüberliegend angeordnete Kurvenführungen vorgesehen, die in Form von schrägen Nuten in den äußeren Kolbenmantel eingearbeitet sind und in die Mitnehmer-Rollen eingreifen, die um Achsen drehbar sind. Die Achsen der Rollen sind am Gehäusemantel der Betätigungsvorrichtung befestigt. Der Kolben führt somit bei einer Druckmittelbeaufschlagung eine Hub- und gleichzeitig eine Drehbewegung aus. Diese Drehbewegung wird über eine im Zentrum des Kolbens ausgebildete Vierkantkupplung auf eine mit einer Ventilwelle verbundene Antriebswelle übertragen. Die Antriebswelle ist im unteren Zylinderdeckel eines rohrförmigen Pneumatikzylinders radial und zu beiden Seiten axial fliegend gelagert und sie greift dabei drehfest mitnehmend in den auf ihr axial verschieblichen Kolben ein. Die Drehwinkelbegrenzung der Antriebswelle erfolgt in einer durch den Kolben in seiner unter der Wirkung einer Rückstellfeder eingenommenen axialen Ruhestellung auf einem axial verstellbaren Einstellglied. Es handelt sich somit um eine hubabhängige und somit mittelbare Drehwinkelbegrenzung.

Die DE 60 2004 001 988 T2 offenbart einen Aktor zum Betätigen eines Ventils, das mit einem drehbaren Ventilelement versehen ist. Ein Kolben ist gegen die Rückstellkraft einer Feder in einem Gehäuse ausschließlich axial verschiebbar, da er über jeweils paarweise, diametral angeordnete, gehäusefeste Führungsstangen, die jeweils axial und in Umfangsrichtung gegeneinander versetzt von beiden Seiten in den Kolben eingreifen, geführt ist. Im Kolbenmantel sind zwei einander gegenüberliegend angeordnete Kurvenführungen in Form von wendelförmigen, endseitig jeweils geschlossenen Nuten eingearbeitet, in die Mitnehmer-Rollen eingreifen, die um eine senkrecht zur Längsachse des Kolbens fest in einer Betätigungsstange angeordnete Achse drehbar sind. Die drehbewegliche Betätigungsstange ist einerseits in einer zylindrischen, zentrischen Bohrung im Kolbenmantel axial und drehbeweglich verschieblich gelagert und sie durchdringt andererseits einen Boden des Gehäuses und findet dort ihr axiales Festlager. Bei einer axialen Verschiebung des Kolbens führt die axial im Gehäuseboden festgelegte Betätigungsstange somit eine zugeordnete Drehbewegung aus. Die Drehbewegungen sind durch Anlage der Mitnehmer-Rollen am jeweils zugeordneten Ende der Nut begrenzt.

Die DE 10 2010 002 621 A1 beschreibt einen Aktor für ein drehbares Funktionselement, insbesondere ein Verschlusselement eines Scheibenventils oder Kugelhahns, der die kinematische Wirkungsweise des Aktors gemäß DE 60 2004 001 988 T2 besitzt. Im Unterschied zu letzterem besitzt er nur zwei Führungsstangen, wobei die eine in dem einen Deckel eines Gehäuses und die andere in dem anderen Deckel verankert ist und die beiden Führungsstangen im Kolben in zueinander entgegengesetzten Richtungen blind enden. Die Drehwinkelbegrenzung der Antriebswelle erfolgt durch axiale Endlagenbegrenzung des Kolbens an den Deckeln. Es handelt sich somit um eine hubabhängige und somit mittelbare Drehwinkelbegrenzung.

In der DE 199 50 582 C1 ist eine Betätigungsvorrichtung für ein drehbares Verschlussteil eines Ventils beschrieben, die die kinematische Wirkungsweise des Aktors gemäß DE 60 2004 001 988 T2 oder DE 10 2010 002 621 A1 besitzt. Im Unterschied zu diesen beiden Aktoren verfügt die Betätigungsvorrichtung über zwei gehäusefeste Führungsstangen, die diametral zueinander in einem Deckel des Gehäuses angeordnet sind und in gleicher Richtung in einem die beiden wendelförmigen Nuten aufnehmenden Schaft des Kolbens blind enden. Die Drehwinkelbegrenzung der Antriebswelle erfolgt durch axiale Endlagenbegrenzung des Kolbens an den Deckeln. Es handelt sich somit um eine hubabhängige und somit mittelbare Drehwinkelbegrenzung.

Die DE 28 17 260 A1 beschreibt eine Stellvorrichtung für Fluidventile, beispielsweise ein Kugelventil, bei der ein innerer, hohler Zylinder in einem zylindrischen äußeren Gehäuse, das diametral angeordnete, axial orientierte Schlitze aufweist, drehbeweglich gelagert ist. Der innere Zylinder besitzt in seiner Mantelfläche zwei diametral angeordnete wendelförmige Nuten. Ein auf dem äußeren Gehäuse angeordneter Hubzylinder besitzt eine Kolbenstange, die in den inneren Zylinder hineingeführt ist und dort mit einem mit der Kolbenstange fest verbundenen Querzapfen, auf dem beiderseits Gleithülsen angeordnet sind, sowohl in die Nuten als auch in die Schlitze eingreift. Das äußere Gehäuse ist mit einem Gehäuse des Kugelventils und der innere Zylinder ist mit einer drehbeweglichen Betätigungsstange des Kugelventils fest verbunden. Die in den Schlitzen axial beweglich geführte Kolbenstange bewirkt somit bei einer durch den Hubzylinder erzeugten geradlinigen Bewegung eine Drehbewegung des inneren Zylinders und damit der Betätigungsstange des Kugelventils im Uhrzeiger- oder Gegenuhrzeigersinn. Die Drehwinkelbegrenzung des inneren Zylinders erfolgt durch axiale Endlagenbegrenzung der Gleithülsen an den geschlossenen Enden der axial orientierten Schlitze. Es handelt sich somit um eine hubabhängige und somit mittelbare Drehwinkelbegrenzung.

Die DE 43 13 751 A1 beschreibt eine Betätigungsvorrichtung für ein drehbares Verschlussstück eines Ventils, bei der ein hülsenförmiger, in ein Gehäuse der Betätigungsvorrichtung hineinragender Fortsatz einer aus einem Deckel des Gehäuses herausgeführten, dort drehbeweglich in einem axialen Festlager gelagerten Antriebswelle zwei diametral angeordnete wendelförmige Nuten aufweist. In einer mit dem Deckel fest verbundenen Lagerhülse sind zwei diametral angeordnete, axial orientierte Schlitze vorgesehen. Eine Kolbenstange eines im Gehäuse angeordneten, verschiebbaren Kolbens ist mit einem Querzapfen fest verbunden, auf dem beiderseits jeweils zwei benachbarte Gleitrollen angeordnet sind. Die jeweils äußere Gleitrolle greift in den Schlitz und die jeweils innere Gleitrolle greift in die Nut ein. Die in den Schlitzen axial beweglich geführte Kolbenstange bewirkt somit bei einer durch den Kolben erzeugten Hubbewegung eine Drehbewegung des hülsenförmigen Fortsatzes und damit der Antriebswelle. Die Drehwinkelbegrenzung der Antriebswelle erfolgt einerseits durch axiale Endlagenbegrenzung des Kolbens am anderen Deckel des Gehäuses und andererseits durch Anlage der Gleitrollen an den geschlossenen Enden der Schlitze. Es handelt sich somit um eine hubabhängige und somit mittelbare Drehwinkelbegrenzung.

Die DE 17 50 372 A offenbart ein Vierwege-Drehschieberumsteuerventil, bei dem ein Ventilelement bzw. ein Drehschieber zwischen zwei Betriebsstellungen verdreht werden kann. Die erforderliche Drehbewegung wird mit Hilfe einer geradlinig arbeitenden Betätigungsvorrichtung erzeugt, die an ihrem Umfang zwei diametral angeordnete Kurvenführungen aufweist. In diese Kurvenführungen greift jeweils ein an einer Antriebsstange des Drehschiebers angeordneter Mitnehmerstift ein. Die beiden Arbeitsstellungen des Drehschiebers werden beispielsweise durch ein an der geradlinig arbeitenden Betätigungsvorrichtung befestigtes Rastteil festgelegt, das in der jeweiligen Arbeitsstellung in eine zugeordnete Rastnut eingreift. Es handelt sich somit um eine hubabhängige und somit mittelbare Drehwinkelbegrenzung.

Eine verlaufsabhängige, veränderliche Steigung der Kurvenführungsnut einer Betätigungsvorrichtung der in Rede stehenden Art ist in der EP 0 622 574 B1 beschrieben. Diese Druckschrift offenbart bei einem allein axial bewegbaren Antriebskolben, der in zwei diametral zueinander angeordneten gehäuseseitigen Geradführungsnuten mittels Mitnehmer-Rollen geführt ist, eine Kurvenfläche der Kurvenführungsnut, die in der Schließstellung des Scheibenventils in einen schwächer gekrümmten und damit steileren Kurvenabschnitt übergeht. Durch die schwächere Krümmung werden eine Vergrößerung der Umfangskraft und damit eine Vergrößerung des Drehmoments in dieser axialen Lage des Antriebskolbens und damit beim Einfahren des Verschlussteils in die Sitzdichtung erreicht.

Eine hubunabhängige, unmittelbare Drehwinkelbegrenzung der Antriebswelle ist aus der DE 20 2005 014 348 U1 und auch aus der DE 297 03 710 U1 bekannt. Bei beiden Drehantrieben ist der Antriebskolben verdrehsicher geführt, und zwar durch zwei diametral zueinander angeordnete, mit einem Boden eines Gehäuses fest verbundene Führungsstangen, die in zugeordnete Führungsbohrungen im Antriebskolben eingreifen. Die DE 20 2005 014 348 U1 offenbart eine Drehbewegungseinrichtung zur Begrenzung der Drehbewegung, die aus einem im Gehäuse verankerten Riegelnocken und einem mit der Antriebswelle fest verbundenen, eine etwa kreisringsegmentartige Ausnehmung aufweisenden Anschlagelement besteht, in die der Riegelnocken einfasst und in der er sich relativ zwischen zwei endseitigen Anschlagflächen auf einer kreisringsegmentförmigen Bahn bewegen kann. Die DE 297 03 710 U1 beschreibt ein an der Antriebswelle befestigtes Anschlagsegment in einer Korrespondenz mit den am Boden des Gehäuses befestigten Führungsstangen, die den Drehwinkel hubunabhängig und direkt auf seinen exakten Sollwert begrenzen. Die beiden bekannten Drehwinkelbegrenzungen sind relativ aufwendig und die Endlagenbegrenzung der Antriebswelle erfolgt nicht unmittelbar am ortsfesten Gehäuse, sondern mittelbar über einen Riegelnocken oder über zwei Führungsstangen, wobei eine Justierung des Drehwinkels nur über eine Nacharbeit an der kreisringsegmentartigen Ausnehmung am Anschlagelement bzw. an dem Anschlagsegment erfolgen kann.

Es ist Aufgabe der vorliegenden Erfindung, eine Betätigungsvorrichtung der gattungsgemäßen Art zu schaffen, die einfach aufgebaut ist und dabei eine hohe Stabilität im Bereich der Lagerung der Antriebswelle und im Bereich der im Antriebskolben angeordneten Gerad- und Kurvenführung aufweist sowie über eine hubunabhängige, unmittelbare Drehwinkelbegrenzung mit größtmöglicher Genauigkeit verfügt.

### ZUSAMMENFASSUNG DER ERFINDUNG

Diese Aufgabe wird durch eine Betätigungsvorrichtung mit den Merkmalen des Anspruchs 1 gelöst. Vorteilhafte Ausführungsformen der Betätigungsvorrichtung sind Gegenstand der Unteransprüche.

Ein erster grundlegender erfinderischer Lösungsgedanke besteht darin, dass die Antriebswelle eine zweiseitige und dabei jeweils unmittelbare radiale Lagerung in einer mit dem Gehäuse fest verbundenen oder in diesem ausgebildeten Lagerhülse findet. Diese unmittelbare radiale Lagerung schafft die günstigsten Voraussetzungen für eine hohe Lagerungsgenauigkeit.

Ein zweiter erfinderischer Lösungsgedanke findet seine Ausprägung darin, dass der Kolbenschaft auf der äußeren Mantelfläche der Lagerhülse axial verschieblich und radial gelagert ist und seinerseits keine Führungsfunktion für andere Bauteile, wie beispielsweise die Antriebswelle, übernimmt. Dadurch bleibt seine Führung und Lagerung auf der Lagerhülse unbeeinträchtigt. Bildet der Antriebskolben, in einer ersten Ausführungsform bestehend aus einem Kolbenboden und dem Kolbenschaft, eine einstückige, vorzugsweise eine stoffschlüssige Einheit, dann sind dadurch günstige Voraussetzungen für eine hohe Führungs- und Lagerungsgenauigkeit gegeben. Besteht der Antriebskolben in einer zweiten Ausführungsform, und hier in wenigstens einer zweiteiligen bzw. zweistückigen Ausführung, aus einem Innenkolben und einem Außenkolben und bildet der Innenkolben für sich mit seinem Kolbenboden und seinem Kolbenschaft eine einstückige, vorzugsweise eine stoffschlüssige Einheit, dann ergeben sich zur ersten Ausführungsform adäquate Führungs- und Lagerungsqualitäten.

Ein dritter grundlegender erfinderischer Lösungsgedanke besteht darin, dass der wenigstens eine Mitnehmerbolzen durch in der Lagerhülse vorgesehene Anschlagmittel eine hubunabhängige, unmittelbare Begrenzung seiner Drehbewegung um die Drehachse erfährt. Da der Mitnehmerbolzen die Drehbewegung unmittelbar an der Antriebswelle generiert, schafft die erfindungsgemäße unmittelbare Begrenzung seiner Drehbewegung die günstigsten Voraussetzungen für eine exakte Einhaltung des gewünschten Sollwertes des Drehwinkels.

Die Teilevielfalt der Betätigungsvorrichtung bei ihrer Verwendung für Ventile unterschiedlicher Nennweite und damit unterschiedlichen Antriebsdrehmomenten reduziert sich, wenn der Antriebskolben wenigstens zweistückig oder zweiteilig ausgeführt und seine Teilung in wenigstens einer die Drehachse der Betätigungsvorrichtung konzentrisch umschließenden Mantelfläche eines Außenkolbens und eines Innenkolbens vorgesehen ist. Dabei bilden der Außen- und der Innenkolben, jeweils für sich gesehen, eine einstückige bzw. einteilige Einheit. Die Anpassung an die unterschiedlichen Antriebsdrehmomente erfolgt in diesem Falle über unterschiedlich groß im Außendurchmesser ausgeführte Außenkolben, während der Innenkolben für alle Antriebsdrehmomente immer die selbe und einzige Maßgeometrie aufweist.

Dabei sieht ein Vorschlag vor, dass der wenigstens eine Außenkolben und der wenigstens eine Innenkolben formschlüssig und lösbar miteinander verbunden sind. Die vorgeschlagene Teilung des Antriebskolbens macht es möglich, den Innenkolben buchsenförmig mit einem zweiten Kolbenboden und einem sich an diesem anschließenden hülsenförmigen zweiten Kolbenschaft auszuführen, während der Außenkolben einen Kolbenring und eine sich an diesem anschließende Kolbenhülse aufweist, wobei die Kolbenhülse den Kolbenschaft vorzugsweise vollständig umschließt. Die Anpassung an die unterschiedlichen Antriebsdrehmomente kann damit sehr einfach über den Kolbenring erfolgen, und die Kolbenhülse stabilisiert gleichzeitig den Kolbenring in seiner Lage auf dem Kolbenschaft und damit auf dem Innenkolben.

Die vorstehend vorgeschlagene Teilung und Ausgestaltung des Antriebskolbens in einen Außen- und einen Innenkolben ermöglicht zum Einen einen besonders stabilen Formschluss zwischen beiden, der sich dadurch auszeichnet, dass der Außenkolben durch einen im Bereich des zweiten Kolbenbodens radial nach innen sich erstreckenden Vorsprung mit einem am zweiten Kolbenboden ausgebildeten Rücksprung eine Mitnahmeverbindung ausbildet. Zum Anderen lassen sich in sehr einfacher Weise die wenigstens eine wendelförmige Nut und die wenigstens eine axiale Nut im zweiten Kolbenschaft, und zwar durchgängig durch die gesamte Wandung desselben, ausbilden. Bei dem gefügten Antriebskolben bildet die Kolbenhülse des Außenkolbens eine Schutzhülle für den zweiten Kolbenschaft mit seiner wenigstens einen axialen und wenigstens einen wendelförmigen Nut.

Wird der Außenkolben unter anderem in Form des vorstehend beschriebenen Kolbenrings ausgebildet, dann lassen sich Außenkolben mit im Außendurchmesser unterschiedlich groß ausgeführten Kolbenringen mit Innenkolben, die immer die selbe und einzige Maßgeometrie aufweisen, fügen, wodurch die Anpassung an unterschiedliche Antriebsdrehmomente sehr einfach gegeben und die Teilevielfalt der Betätigungsvorrichtung reduziert ist.

Ein Vorschlag sieht vor dass der wenigstens eine Geradführungs-Nocken in oder an der Lagerhülse befestigt ist. Dadurch erfährt der Antriebskolben seine eine Verdrehung verhindernde Geradführung an jenem Bauteil, nämlich der Lagerhülse, das ihn auch generell axial führt. Sind, wie dies ein weiterer Vorschlag vorsieht, zwei diametral zueinander angeordnete Geradführungs-Nocken vorgesehen, von denen jeder in eine zugeordnete axiale Nut eingreift, dann ergibt sich dadurch eine günstigere Kräfteverteilung innerhalb der Paarung Kolbenschaft, Geradführungs-Nocken und Lagerhülse und eine verbesserte verkantungsfreie Führung des Antriebskolbens auf der Lagerhülse, als dies mit nur einem Geradführungs-Nocken der Fall ist.

Eine günstigere Kräfteverteilung innerhalb der Paarung Kolbenschaft, Mitnehmerbolzen und Antriebswelle und damit wiederum eine verbesserte verkantungsfreie Führung des Antriebskolbens auf der Lagerhülse wird nach einem anderen Vorschlag dadurch sichergestellt, dass zwei diametral zueinander angeordnete wendelförmige Nuten im Kolbenschaft vorgesehen sind, in die jeweils ein zugeordneter Mitnehmerbolzen eingreift. Sind mit Blick auf diese Ausführungsform die Mitnehmerbolzen zu einem einzigen, durchgehenden Mitnehmerbolzen zusammengeführt, der mit seinem jeweiligen Ende in eine der wendelförmigen Nuten eingreift, dann vereinfacht sich die Anordnung bei gleichzeitiger Erhöhung ihrer Stabilität.

Eine weitere Ausführungsform, die einen eigenständigen Erfindungsgedanken beinhaltet, sieht vor, dass der wenigstens eine Geradführungs-Nocken und der wenigstens eine Mitnehmerbolzen mit ihrer jeweiligen Längsachse in einer einzigen, senkrecht zur Drehachse orientierten Anordnungsebene angeordnet sind. Damit der Kolbenschaft axial möglichst kurz ausgeführt werden kann, wird weiterhin vorgeschlagen, dass die Anordnungsebene durch einen dem Antriebskolben zugewandten endseitigen Bereich der Lagerhülse verläuft.

Insbesondere bei zwei Geradführungs-Nocken und zwei Mitnehmerbolzen oder einem aus den beiden Mitnehmerbolzen zusammengeführten einzigen, durchgehenden Mitnehmerbolzen werden die aus dieser Ausführungsform resultierenden günstigen Kräfteverteilungen am Antriebskolben augenfällig. Da eine der Geradführung dienende axiale Nut und eine wendelförmige Nut im Wechsel und zweifach am Umfang des Kolbenschaftes angeordnet sind, ergeben sich zwischen benachbarten Nuten, in axialer Erstreckungsrichtung des Kolbenschaftes gesehen, keilförmige Umfangsabschnitte, deren Verjüngung jeweils entgegengesetzt orientiert ist. Wird der Kolbenschaft nun im Zuge seines Hubes, und zwar mit den beiden verjüngten Enden der zwei Umfangsabschnitte zuerst, über die Lagerhülse aufgeschoben und damit jeweils zwischen einen Geradführungs-Nocken und einen Mitnehmerbolzen gepresst, wodurch spreizende Aktionskräfte auf diese wirken, dann erfährt der jeweilige Umfangsabschnitt in der Anordnungsebene von dem Geradführungs-Nocken und dem Mitnehmerbolzen Reaktionskräfte, die entgegengesetzt zu den Aktionskräften wirken und sich in Umfangsrichtung kompensieren. Kehrt sich die Hubrichtung des Kolbenschaftes um, dann werden die zwei anderen Umfangsabschnitte, und zwar ebenfalls mit den beiden verjüngten Enden zuerst, jeweils zwischen einen Geradführungs-Nocken und einen Mitnehmerbolzen gepresst, sodass nunmehr der jeweilige Umfangsabschnitt in gleicher Weise, wie vorstehend beschrieben, Reaktionskräfte erfährt, die ebenfalls entgegengesetzt wirken und sich in Umfangsrichtung kompensieren.

Die Kräftekompensation durch Anordnung des wenigstens einen Geradführungs-Nockens und des wenigstens einen Mitnehmerbolzens in der vorgeschriebenen Anordnungsebene wirkt sich dann besonders vorteilhaft aus, wenn die jeweilige axiale Nut und/oder die jeweilige wendelförmige Nut, in die der Geradführungs-Nocken bzw. der Mitnehmerbolzen eingreift, zum freien Ende des Kolbenschaftes hin offen ausgebildet ist. Dadurch gestaltet sich die Herstellung der Kurvenführung sehr einfach. Dies gilt in besonderer Weise auch dann, wenn die Kurvenführung in Form zweier, jeweils zum freien Ende des Kolbenschaftes hin offenen wendelförmigen Nuten ausgebildet ist, die diametral einander gegenüberliegend angeordnet sind. Die offene Ausbildung der Nuten erleichtert zum Einen die Montage des Antriebskolbens auf der Lagerhülse signifikant, da die offenen Nuten einfach auf den Geradführungs-Nocken und den Mitnehmerbolzen aufgeschoben werden können, und zum Anderen ist durch diese Ausbildung die Stabilität- und Festigkeit der offenen Anordnung nicht beeinträchtigt, da keine freien Reaktionskräfte existieren, die die infrage kommenden Umfangsabschnitte des Kolbenschaftes, die jeweils als auskragende, einseitig eingespannte Balken betrachtet werden können, in Umfangsrichtung beanspruchen könnten.

Um den gewünschten Sollwert des Drehwinkels, vorzugsweise einen von 90 Grad, mit sehr hoher Genauigkeit zu determinieren, wird vorgeschlagen, dass das dem wenigstens einen Mitnehmerbolzen zugeordnete Anschlagmittel in Form einer in der Lagerhülse vorgesehenen, sich in deren Umfangsrichtung begrenzt erstreckenden Umfangsnut ausgebildet ist, an deren jeweiliger endseitiger Begrenzung der Mitnehmerbolzen zur Anlage gelangt. Bei zwei oder einem einzigen, durchgehenden Mitnehmerbolzen sind dann zwei diametral zueinander angeordnete diesbezügliche Umfangsnuten vorgesehen. In beiden Fällen ist die jeweilige Umfangsnut in Umfangsrichtung, d.h. an ihrer jeweiligen lateralen Begrenzung, in einer bevorzugten Ausführungsform derart bemessen, dass die Umfangsnut unter Berücksichtigung der und im Zusammenwirken mit den relevanten Abmessungen des zugeordneten Mitnehmerbolzens zwischen den begrenzten DrehbewegungsEndlagen des Mitnehmerbolzens einen Drehwinkel zulässt, der exakt einem vorgegebenen Sollwert entspricht. Dieser Sollwert ist durch die Drehbewegung des Verschlussteils zwischen dessen Schließ- und Offenstellung determiniert.

Das Drehmoment zur Betätigung des scheibenförmigen Verschlussteils des Ventils lässt sich auf einfache Weise den Erfordernissen, insbesondere in der Phase des Einfahrens in die Sitzdichtung, anpassen, wenn die wenigstens eine wendelförmige Nut eine verlaufsabhängige veränderliche Steigung aufweist. Diesbezüglich ist es vorteilhaft, die Steigung, gemessen gegen die in Richtung der Drehachse orientierte Längsachse des Antriebskolbens, im jeweiligen Endbereich der wendelförmigen Nut größer als in ihrem mittleren Bereich auszuführen. Dadurch wird in den Endbereichen ein größeres Drehmoment als im mittleren Bereich realisiert. Beide Endbereiche treten diesbezüglich in optionale Funktion, da die Betätigungsvorrichtung, bezogen auf das Verschlussteil, sowohl federschließend als auch federöffnend am Ventil angeordnet werden kann. Eine derartige Schaltcharakteristik wird durch eine sich um 90 Grad unterscheidende Anordnung der Betätigungsvorrichtung gegenüber dem Ventil erreicht.

Bezüglich der Gehäuseausführung ist vorgesehen, dass der Gehäusemantel mit einer von der Antriebswelle durchdrungenen ersten Gehäusestirnfläche lösbar oder stoffschlüssig verbunden ist. Im ersten Falle bleibt der Innenraum der Betätigungsvorrichtung zu Wartungszwecken zugänglich. Im zweiten Falle ist die Betätigungsvorrichtung sehr kostengünstig herzustellen, wobei eine diesbezügliche Wartung nicht mehr möglich ist.

Die Herstellkosten der Betätigungsvorrichtung lassen sich weiter reduzieren, wenn der Gehäusemantel mit einer der ersten Gehäusestirnfläche gegenüberliegenden zweiten Gehäusestirnfläche eine topfförmige, einstückige Einheit bildet.

Die erfindungsgemäße Ausbildung der Betätigungsvorrichtung stellt eine sehr stabile und zweiseitige radiale Lagerung der Antriebswelle in der gehäusefesten Lagerhülse sicher. Um diese Lagerung auch für die axiale Lagerung der Antriebswelle zu nutzen, ist vorgesehen, dass in der Lagerhülse im Abstand voneinander ein erstes Lager und ein zweites Lager zur radialen und axialen Lagerung der Antriebswelle vorgesehen sind, wobei das dem Antriebskolben benachbarte zweite Lager eine zu diesem orientierte Axialkraft und das erste Lager eine entgegengesetzte Axialkraft, jeweils ausgeübt von der Antriebswelle und hier jeweils vorzugsweise von einer Schulter derselben, aufnehmen.

Ventile sehr kleiner Nennweite erfordern in der Regel eine Betätigungsvorrichtung, die nur ein entsprechend kleines Antriebsdrehmoment generieren muss. Dieses Antriebsdrehmoment erfordert wiederum einen im Außendurchmesser relativ kleinen, vorzugsweise einstückig ausgebildeten Antriebskolben mit einem näherungsweise durchmessergleichen Kolbenschaft, weil eine Reduzierung seines Durchmessers wegen der in ihm unterzubringenden konstruktiven Vorkehrungen nur schwer möglich ist. Bei dieser Ausführung ist die Anordnung einer den Kolbenschaft außenseitig umschließenden Rückstellfeder nicht möglich. Um dieses Anordnungsproblem der Rückstellfeder in vorteilhafter Weise zu lösen, sieht ein Vorschlag vor,_dass die wenigstens eine Rückstellfeder einerseits innerhalb des ersten Kolbenschaftes angeordnet ist und ihre axiale Abstützung an einem ersten Kolbenboden des ersten Antriebskolbens findet, und dass andererseits in einer stirnseitigen Ausnehmung in der Antriebswelle die Aufnahme und axiale Abstützung der wenigstens einen Rückstellfeder vorgesehen ist. Die Lagestabilität der Rückstellfeder wird erhöht, wenn sie, wie dies vorgeschlagen wird, in Längsrichtung zweigeteilt ausgeführt ist und ihre benachbarten Enden in einem Zwischenstück Aufnahme finden, das vorzugsweise in der stirnseitigen Ausnehmung axial verschieblich geführt ist.

Die erfindungsgemäße Betätigungsvorrichtung findet bevorzugt als ein pneumatisch oder hydraulisch betätigbarer Drehantrieb für ein Scheiben- oder Drosselklappenventil Verwendung.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung zwei bevorzugte Ausführungsformen der Betätigungsvorrichtung dargestellt und nachfolgend nach Aufbau und Funktion beschrieben. Es zeigen
- **Figur 1**: im Mittelschnitt eine bevorzugte erste Ausführungsform einer Betätigungsvorrichtung gemäß der Erfindung mit einem einstückigen Antriebskolben;
- **Figur 2**: in perspektivischer Darstellung einen Blick in die aufgeschnittene Betätigungsvorrichtung gemäß **Figur 1****;**
- **Figur 3**: einen Querschnitt durch die Betätigungsvorrichtung gemäß **Figur 1** entsprechend einem in Figur 1 mit **A-B** gekennzeichneten Schnittverlauf;
- **Figur 4**: in perspektivischer Darstellung die hubunabhängige Drehwinkelbegrenzung der Antriebswelle der Betätigungsvorrichtung gemäß **Figur 1****;**
- **Figur 5**: im Mittelschnitt eine bevorzugte zweite Ausführungsform einer Betätigungsvorrichtung gemäß der Erfindung mit einem zweistückigen Antriebskolben und
- **Figur 6**: einen Querschnitt durch die Betätigungsvorrichtung gemäß **Figur 5** entsprechend einem in Figur 5 mit C-D gekennzeichneten Schnittverlauf.

### DETAILLIERTE BESCHREIBUNG

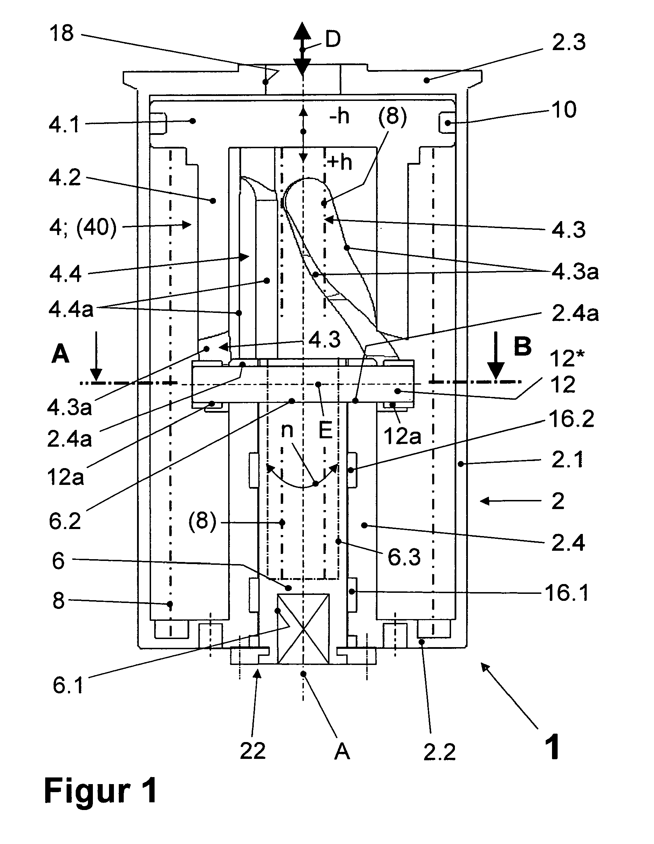

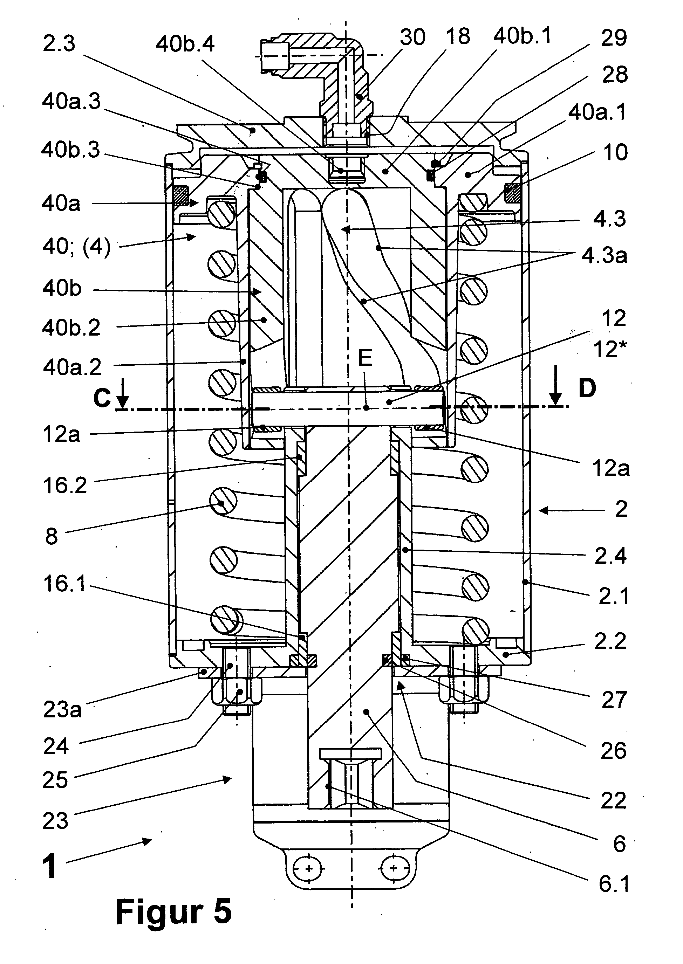

Eine Betätigungsvorrichtung 1 **(****Figuren 1** bis **6****)** für einen drehbaren Verschlussteil eines Ventils ist, bezogen auf die Darstellungslage, untenseits über ein Laternengehäuse 23 **(****Figur 5****)** mit letzterem verbunden (Ventil mit Verschlussteil ist nicht dargestellt). Das Laternengehäuse 23 ist mit einem Laternenflansch 23a vorzugsweise mittels Gewindebolzen 24 und Muttern 25 an eine erste Gehäusestirnfläche 2.2 eines Gehäuses 2 der Betätigungsvorrichtung 1 angeschraubt. Im Ausführungsbeispiel handelt es sich um eine pneumatisch betätigbare Betätigungsvorrichtung 1 (pneumatisches Druckmittel D), auch als Drehantrieb bezeichnet, für das Ventil, das auch als Scheiben- oder Drosselklappenventil bezeichnet wird. Die Betätigungsvorrichtung 1 kann bei entsprechender Anpassung auch mit einem hydraulischen Druckmittel D beaufschlagt werden.

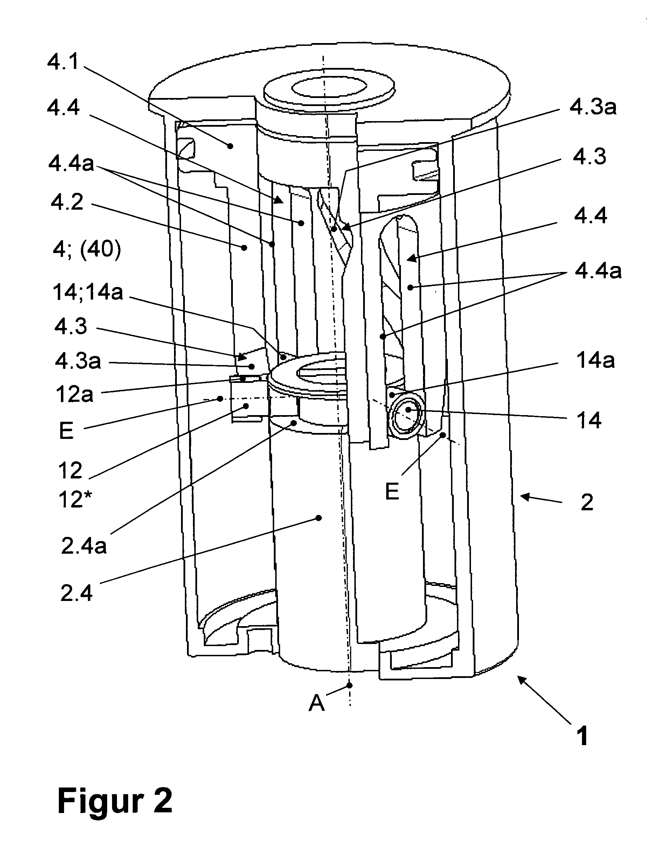

Die Betätigungsvorrichtung 1 besteht aus dem Gehäuse 2 **(****Figuren 1****,** **2****,** **5****),** in dem ein gegen einen zylindrischen Gehäusemantel 2.1 mittels einer Kolbendichtung 10 abgedichteter, einseitig mit dem Druckmittel D, vorzugsweise Druckluft, beaufschlagbarer, axial verschiebbarer, beispielsweise einteilig oder einstückig ausgebildeter erster Antriebskolben 4 **(****Figuren 1****,** **2****)** oder beispielsweise zweiteilig oder zweistückig ausgebildeter zweiter Antriebskolben 40 **(****Figur 5****)** angeordnet ist. Die Antriebskolben 4, 40 führen jeweils bei Beaufschlagung mit dem Druckmittel D eine axiale Verschiebebewegung gegen die Wirkung wenigstens einer Rückstellfeder 8 aus. Anstelle der wenigstens einen Rückstellfeder 8 kann der Antriebskolben 4, 40 auch durch wechselseitige Beaufschlagung mit einem Druckmittel D eine hin- und hergehende Verschiebebewegung ausführen, wobei in diesem Falle der Antriebskobens 4, 40 durch das seine Rückseite beaufschlagende Druckmittel D in seine Ausgangs- oder Ruhelage überführt wird.

Der einteilige erste Antriebskolben 4 gemäß den **Figuren 1****,** **2** (bevorzugte erste Ausführungsform) weist einen ersten Kolbenboden 4.1 auf, an dessen dem Ventil zugewandten Seite zentrisch ein vorzugsweise rohrförmig ausgebildeter erster Kolbenschaft 4.2 vorgesehen ist. Zur Realisierung einer Geradführung 4.4 des ersten Antriebskolbens 4, d.h. zu seiner axialen Führung innerhalb des Gehäuses 2, ist im rohrförmigen ersten Kolbenschaft 4.2 wenigstens eine axiale Nut 4.4a ausgebildet. Im bevorzugten und dargestellten Ausführungsbeispiel handelt es sich um zwei diametral zueinander angeordnete axiale Nuten 4.4a **(****Figuren 2****).** Darüber hinaus weist der erste Kolbenschaft 4.2 wenigstens eine wendelförmige Nut 4.3a auf, die eine Kurvenführung 4.3 ausbildet. Im bevorzugten Ausführungsbeispiel ist in den Bereichen zwischen den beiden axialen Nuten 4.4a jeweils eine wendelförmige Nut 4.3a vorgesehen **(****Figuren 1**, **2**).

Eine das Verschlussteil des Ventils mittelbar oder unmittelbar drehend antreibende Antriebswelle 6 ist einseitig über die erste Gehäusestirnfläche 2.2 des Gehäuses 2 aus letzterem herausgeführt und in einer in das Gehäuse 2 eingreifenden, mit diesem fest verbundenen und in diesem endenden Lagerhülse 2.4 mittels eines ersten und eines zweiten Lagers 16.1, 16.2 zweiseitig radial gelagert. Die Antriebswelle 6 erfährt auch eine axial beidseitig wirkende axiale Lagerung, die im Ausführungsbeispiel **(****Figur 1**) mittels eines schematisch gezeigten, beispielsweise an einem an der ersten Gehäusestirnfläche 2.2 angeordneten Axiallagers 22 ausgebildet ist. Zur drehfesten mittelbaren oder unmittelbaren Kopplung der Antriebswelle 6 mit dem Verschlussteil ist in der Stirnseite der Antriebswelle 6 eine Mitnehmer-Ausnehmung 6.1 vorgesehen, die beispielsweise vierkantförmig ausgebildet sein kann. Der rohrförmige erste Kolbenschaft 4.2 umgreift, bezogen auf die Darstellungslage, in seiner oberen Hubendlage mit seiner inneren Mantelfläche ein Stück weit in axialer Richtung den endseitigen Bereich der Lagerhülse 2.4, wodurch er bei geeigneter Bemessung der Paarung des Durchmessers der inneren Mantelfläche und des Außendurchmessers der Lagerhülse 2.4 auf der äußeren Mantelfläche der Lagerhülse 2.4 axial verschieblich und radial gelagert ist.

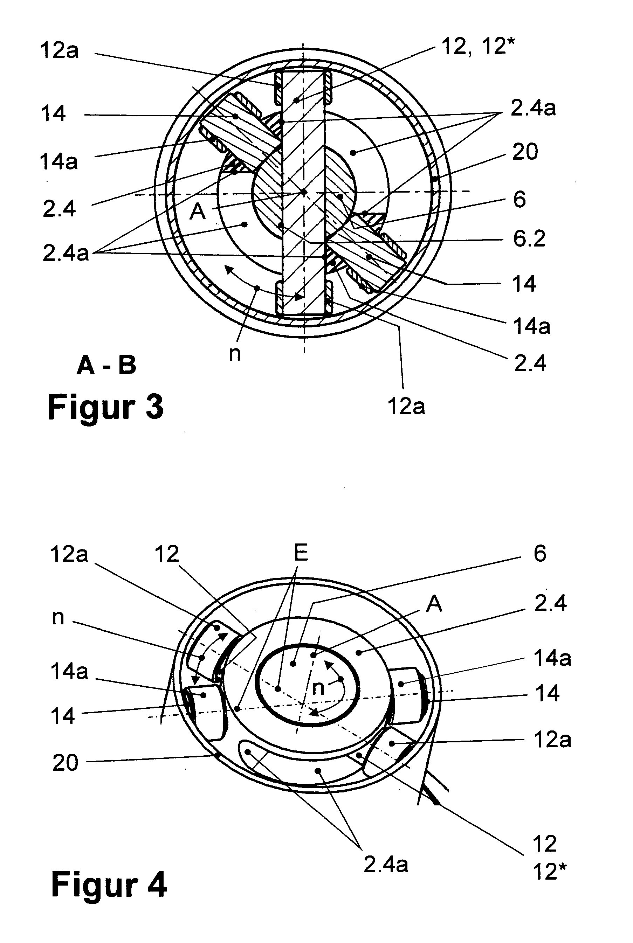

In die wenigstens eine axiale Nut 4.4a greift ein Geradführungs-Nocken 14 ein, der in radialer Richtung in oder an der Lagerhülse 2.4 befestigt ist. Im Ausführungsbeispiel sind zwei diametral zueinander angeordnete Geradführungs-Nocken 14 vorgesehen, die in die jeweils zugeordnete axiale Nut 4.4a eingreifen **(****Figur 3****,** **Figur 2****).** Zur Verminderung der Reibung ist der Geradführungs-Nocken 14 vorteilhaft außenseits mit einer Geradführungs-Rolle 14a versehen, die zweckmäßig um den Geradführungs-Nocken 14, der nunmehr als Achse fungiert, drehbar ist.

In die wenigstens eine wendelförmige Nut 4.3a greift ein Mitnehmerbolzen 12 ein **(****Figur 1****),** der in radialer Richtung an oder in der Antriebswelle 6 befestigt ist **(****Figur 3****)** und die die Antriebswelle 6 außenseits umschließende Lagerhülse 2.4 drehverschieblich durchdringt **(****Figur 4****).** Es können vorteilhaft zwei diametral zueinander angeordnete Mitnehmerbolzen 12 vorgesehen sein, die in die jeweils zugeordnete wendelförmige Nut 4.3a eingreifen. Im Ausführungsbeispiel sind die Mitnehmerbolzen 12 zu einem einzigen, durchgehenden Mitnehmerbolzen 12* zusammengeführt **(****Figuren 1****,** **2****,** **3****),** der die Antriebswelle 6 in einer radialen Querbohrung 6.2 durchdringt, dort befestigt ist, die Lagerhülse 2.4 beidseitig drehverschieblich durchdringt und mit seinem jeweiligen Ende in die zugeordnete wendelförmige Nut 4.3a eingreift **(****Figur 3****,** **Figuren 1****,** **2****,** **5****).** Zur Verminderung der Reibung ist der Mitnehmerbolzen 12, 12* vorteilhaft außenseits mit einer Kurvenführungs-Rolle 12a versehen, die zweckmäßig um den Mitnehmerbolzen 12, 12*, der nunmehr als Achse fungiert, drehbar ist.

Der wenigstens eine Geradführungs-Nocken 14 und der wenigstens eine Mitnehmerbolzen 12; 12* sind mit ihrer jeweiligen Längsachse vorzugsweise in einer einzigen, senkrecht zu einer Drehachse A orientierten Anordnungsebene E angeordnet **(****Figuren 2****,** **4****,** **1****,** **5****),** wobei mit Blick auf einen axial möglichst kurz bauenden ersten Kolbenschaft 4.2 die Anordnungsebene E durch einen dem ersten Antriebskolben 4 zugewandten endseitigen Bereich der Lagerhülse 2.4 verläuft. Um die Kurvenführungs-Rolle 12a und die Geradführungs-Rolle 14a auf denkbar einfache Weise auf dem zugeordneten Mitnehmerbolzen 12, 12* bzw. dem Geradführungs-Nocken 14 gegen Ablaufen zu sichern und/oder den ersten Kolbenschaft 4.2 radial außenseits zu stabilisieren, kann beispielsweise ein Mantelrohr 20 über die äußere Mantelfläche des ersten Kolbenschaftes 4.2 aufgeschoben werden **(****Figuren 3, 4****).**

Mit Blick auf eine einfache Montage des ersten Antriebskolbens 4 ist es von Vorteil, die wenigstens eine axiale Nut 4.4a und/oder die wenigstens eine wendelförmige Nut 4.3a zum freien Ende des ersten Kolbenschaftes 4.2 hin offen auszubilden **(****Figuren 1****,** **2****),** da durch diese Ausbildung das Aufstecken des ersten Kolbenschaftes 4.2 mit seinen Nuten 4.3a, 4.4a über den jeweiligen Geradführungs-Nocken 14 und den Mitnehmerbolzen 12, 12* gegeben ist. Die wenigstens eine wendelförmige Nut 4.3a erhält weiterhin bevorzugt eine verlaufsabhängige veränderliche Steigung. Letztere ist, gemessen gegen die in Richtung der Drehachse A der Antriebswelle 6 orientierte Längsachse des ersten Antriebskolbens 4, bevorzugt im jeweiligen Endbereich der wendelförmigen Nut 4.3a größer als im mittleren Bereich ausgeführt **(****Figuren 1****,** **5****).**

Der erste Antriebskolben 4 besitzt durch die Geradführung 4.4 ausschließlich einen axialen Verschiebefreiheitsgrad. Im Zuge dieser axialen Verschiebebewegung bei Beaufschlagung des ersten Kolbenbodens 4.1 mit dem Druckmittel D, das einem zwischen dem ersten Kolbenboden 4.1, dem Gehäusemantel 2.1 und einer letzteren obenseits abschließenden zweiten Gehäusestirnfläche 2.3 gebildeten Druckmittelraum über eine in der zweiten Gehäusestirnfläche 2.3 ausgebildeten Druckmittelöffnung 18 zugeführt wird, bewegt sich der erste Antriebskolben 4 nach unten (positive Huborientierung +h; **Figur 1****),** sodass die Antriebswelle 6 durch den beidseitig in die wendelförmigen Nuten 4.3a eingreifenden Mitnehmerbolzen 12* eine, von unten gesehen, rechtsdrehende Drehbewegung n um die Drehachse A, d.h. im Uhrzeigersinn, erfährt **(****Figuren 1 bis 5****).** Aus der unteren Hubendlage bewegt sich der erste Antriebskolben 4 unter der Wirkung der wenigstens einen Rückstellfeder 8 nach oben (negative Huborientierung -h), sodass sich auch die Orientierung der Drehbewegung n umkehrt. Es versteht sich, dass die vorgenannte rechts- oder linksgerichtete Drehbewegung n davon abhängt, ob es sich um rechts- oder linksgängige wendelförmige Nuten 4.3a handelt. Im Ausführungsbeispiel sind die wendelförmigen Nuten 4.3a rechtsgängig ausgeführt. Die in **Figur 1** nur strichpunktiert und damit schematisch angedeutete wenigstens eine Rückstellfeder 8 stützt sich obenseits am ersten Kolbenboden 4.1 und untenseits an der ersten Gehäusestirnfläche 2.2 jeweils unmittelbar ab. In **Figur 2** ist auf die Darstellung der wenigstens einen Rückstellfeder 8 gänzlich verzichtet; in **Figur 5** **ist** die wenigstens eine Rückstellfeder 8 in der im Maschinenbau üblichen Form dargestellt.

Durch die wirksame axiale Länge der wenigstens einen wendelförmigen Nut 4.3a oder durch eine beidseitige Begrenzung des axialen Hubs des ersten Antriebskolbens 4 ergibt sich zwischen den beiden Hubendlagen des ersten Antriebskolbens 4 ein maximaler Drehwinkel. Eine diesbezügliche hubabhängige Begrenzung des Drehwinkels auf einen gewünschten Sollwert ist im Regelfall unbefriedigend und ungenau, da die hubabhängige Begrenzung von einer Reihe von Fertigungstoleranzen beeinflusst wird. Um diesen generellen Mangel der hubabhängigen Begrenzung zu vermeiden, ist bei der erfindungsgemäßen Betätigungsvorrichtung 1 vorgesehen, dass der wenigstens eine Mitnehmerbolzen 12 durch in der Lagerhülse 2.4 vorgesehene Anschlagmittel 2.4a eine hubunabhängige, unmittelbare Begrenzung seiner Drehbewegung n **(****Figuren 3, 4****,** **6****)** um die Drehachse A erfährt.

Die vorg. allgemeine Lehre ist bevorzugt derart ausgestaltet, dass das dem wenigstens einen Mitnehmerbolzen 12 zugeordnete Anschlagmittel 2.4a in Form einer in der Lagerhülse 2.4 vorgesehenen, sich in deren Umfangsrichtung begrenzt erstreckenden Umfangsnut 2.4a ausgebildet ist (s. insbesondere **Figur 4****),** an deren jeweiliger endseitiger Begrenzung der Mitnehmerbolzen 12 zur Anlage gelangt. Im dargestellten bevorzugten Ausführungsbeispiel ist das dem einzigen Mitnehmerbolzen 12* zugeordnete Anschlagmittel 2.4a in Form von zwei diametral zueinander angeordneten, in der Lagerhülse 2.4 vorgesehenen, sich in deren Umfangsrichtung begrenzt erstreckenden Umfangsnuten 2.4a ausgebildet, an deren jeweiliger endseitiger Begrenzung jeweils ein Ende des Mitnehmerbolzens 12* zur Anlage gelangt **(****Figuren 3, 4****,** **6****,** **1****,** **5****).** Dabei ist die jeweilige Umfangsnut 2.4a derart in Umfangsrichtung bemessen, dass die Umfangsnut 2.4a unter Berücksichtigung der und im Zusammenwirken mit den relevanten Abmessungen des zugeordneten Mitnehmerbolzens 12; 12* zwischen den begrenzten Drehbewegungs-Endlagen des Mitnehmerbolzens 12; 12* einen Drehwinkel zulässt, der exakt einem vorgegebenen Sollwert entspricht. Der gewünschte Sollwert des Drehwinkels entspricht im Regelfall dem Drehwinkel des Verschlussteils zwischen dessen Schließ- und Offenstellung, vorzugsweise 90 Grad.

Der Gehäusemantel 2.1 ist mit der von der Antriebswelle 6 durchdrungenen ersten Gehäusestirnfläche 2.2 lösbar gefügt oder stoffschlüssig verbunden. Im Ausführungsbeispiel ist eine stoffschlüssige Verbindung dargestellt. Der Gehäusemantel 2.1 bildet weiterhin mit der der ersten Gehäusestirnfläche 2.2 gegenüberliegenden zweiten Gehäusestirnfläche 2.3 eine topfförmige, vorzugsweise einstückige Einheit.

Durch Zuordnung der Betätigungsvorrichtung 1 zu den beiden möglichen Endstellungen des Ventils, der Schließ- und der Offenstellung, kann die vorstehend beschriebene Abwärtsbewegung des Antriebskolbens 4 (positive Huborientierung +h) die Öffnungs- oder die Schließbewegung des Ventils generieren. Die Aufwärtsbewegung des Antriebskolbens 4 (negative Huborientierung -h) wird allein durch die Kraft der Rückstellfeder 8 und sinngemäß in umgekehrter Abfolge der beschriebenen Schritte bewirkt. Abhängig von der vorstehend beschriebenen Zuordnung generiert die Aufwärtsbewegung dann die Schließ- oder die Öffnungsbewegung des Ventils.

Der wenigstens eine Geradführungs-Nocken 14 und der wenigstens eine Mitnehmerbolzen 12, 12* sind nach einer bevorzugten Ausführungsform, die einen eigenständigen Erfindungsgedanken beinhaltet, mit ihrer jeweiligen Längsachse in der einzigen, senkrecht zur Drehachse A orientierten Anordnungsebene E angeordnet. Insbesondere bei zwei Geradführungs-Nocken 14 und zwei Mitnehmerbolzen 12 oder einem aus den beiden Mitnehmerbolzen 12 zusammengeführten einzigen, durchgehenden Mitnehmerbolzen 12* werden die aus dieser Ausführungsform resultierenden günstigen Kräfteverteilungen am Antriebskolben 4, insbesondere am ersten Kolbenschaft 4.2 augenfällig. Da die der Geradführung 4.4 dienende axiale Nut 4.4a und die wendelförmige Nut 4.3a im Wechsel und zweifach am Umfang des ersten Kolbenschaftes 4.2 angeordnet sind, ergeben sich zwischen benachbarten Nuten 4.3a, 4.4a, in axialer Erstreckungsrichtung des ersten Kolbenschaftes 4.2 gesehen, keilförmige Umfangsabschnitte (teilweise aus Figur 1 ersichtlich), deren Verjüngung jeweils entgegengesetzt orientiert ist. Wird der erste Kolbenschaft 4.2 nun im Zuge seiner positiven Huborientierung +h, und zwar mit den beiden verjüngten Enden der zwei Umfangsabschnitte zuerst, über die Lagerhülse 2.4 aufgeschoben und damit jeweils zwischen einen Geradführungs-Nocken 14 und einen Mitnehmerbolzen 12, 12* gepresst, wodurch spreizende Aktionskräfte auf diese wirken, dann erfährt der jeweilige Umfangsabschnitt in der Anordnungsebene E von dem Geradführungs-Nocken 14 und dem Mitnehmerbolzen 12, 12* Reaktionskräfte, die entgegengesetzt zu den Aktionskräften wirken und sich in Umfangsrichtung kompensieren. Kehrt sich die Hubrichtung des ersten Kolbenschaftes 4.2 um (negative Huborientierung -h), dann werden die zwei anderen Umfangsabschnitte, und zwar ebenfalls mit den beiden verjüngten Enden zuerst, jeweils zwischen einen Geradführungs-Nocken 14 und einen Mitnehmerbolzen 12, 12* gepresst, sodass nunmehr der jeweilige Umfangsabschnitt in gleicher Weise, wie vorstehend beschrieben, Reaktionskräfte erfährt, die ebenfalls entgegengesetzt wirken und sich in Umfangsrichtung kompensieren. Durch diese Kräftekompensation kann der erste Kolbenschaft 4.2, in dem bevorzugt zu seinem freien Ende hin offen ausgebildete Nuten 4.3a, 4.4a vorgesehen sind, wodurch er damit in Umfangsrichtung zwangsläufig weniger starr als mit in sich geschlossenen Nuten ausgeführt ist, frei bleiben von mehr oder weniger aufwendigen verstärkenden Maßnahmen. Die Montage des Antriebskolbens 4 wird durch die offenen Nuten 4.3a, 4.4a signifikant vereinfacht.

Bei einer Betätigungsvorrichtung 1 für Ventile kleiner Nennweite wird auf die wenigstens eine den ersten Kolbenschaft 4.2 umschließende Rückstellfeder 8 verzichtet **(****Figur 1****)** und stattdessen ist die wenigstens eine Rückstellfeder (8) einerseits innerhalb des ersten Kolbenschaftes 4.2 angeordnet und findet ihre axiale Abstützung an dem ersten Kolbenboden 4.1 des ersten Antriebskolbens 4 und sie findet andererseits in einer stirnseitigen Ausnehmung 6.3 in der Antriebswelle 6 Aufnahme und axiale Abstützung (strichpunktierte Darstellung der Rückstellfeder (8) in **Figur 1****).** Eine diesbezügliche Ausführung ist nur möglich, wenn auf die Ausbildung eines durchgehenden Mitnehmerbolzens 12* verzichtet wird und zwei voneinander getrennte Mitnehmerbolzen 12 vorgesehen sind. In diesem Falle ist die Rückstellfeder (8) zweckmäßig in Längsrichtung zweigeteilt ausgeführt und ihre benachbarten Enden finden in einem nicht dargestellten Zwischenstück Aufnahme, das vorzugsweise in der stirnseitigen Ausnehmung 6.3 axial verschieblich geführt ist.

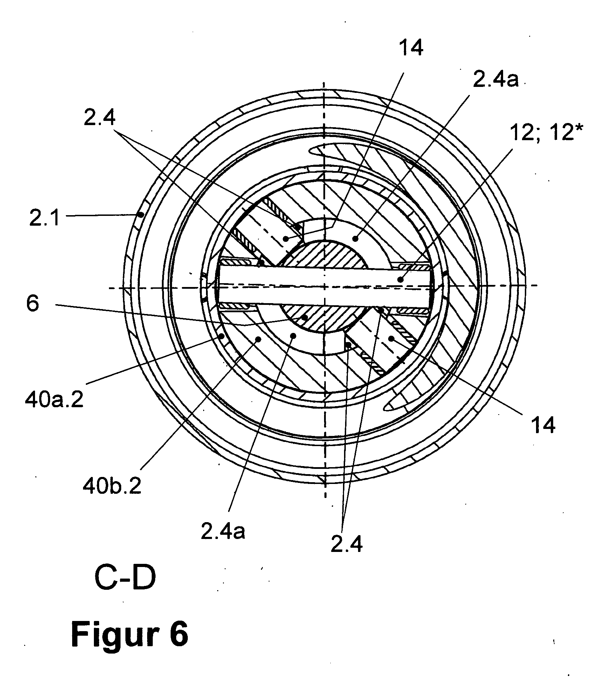

Der zweistückige bzw. zweiteilige zweite Antriebskolben 40 gemäß den **Figuren 5****,** **6** (bevorzugte zweite Ausführungsform) wird nachfolgend in seinem Aufbau beschrieben. Seine Anordnung und Funktion innerhalb der vorstehend beschriebenen Betätigungsvorrichtung 1 entspricht weitestgehend jener des ersten Antriebskolbens 4 in den **Figuren 1** bis **4****,** und die vorstehende Beschreibung ist sinngemäß auch auf die zweite Ausführungsform uneingeschränkt übertragbar. Auf eine diesbezügliche Beschreibung wird daher verzichtet.

Die Teilung des zweiten Antriebskolbens 40 ist in wenigstens einer die Drehachse A konzentrisch umschließenden Mantelfläche eines Außenkolbens 40a und eines Innenkolbens 40b vorgesehen. Im Ausführungsbeispiel sind es zwei radial beabstandete Mantelflächen, sodass am Außenkolben 40a ein radial nach innen gerichteter Vorsprung 40a.3 und am Innenkolben 40b ein hierzu komplementärer Rücksprung 40b.3 gebildet ist. Der Außenkolben 40a und der Innenkolben 40b sind vorzugsweise formschlüssig und lösbar miteinander verbunden. Die Fügung beider kann aber auch kraft- und/oder stoffschlüssig (beispielsweise Verpressung und/oder Verschweißung, Verlötung) vorgenommen werden. Der Innenkolben 40b ist buchsenförmig mit einem zweiten Kolbenboden 40b.1 und einem sich an diesem anschließenden hülsenförmigen zweiten Kolbenschaft 40b.2 ausgeführt. Der Außenkolben 40a weist einen Kolbenring 40a.1 und eine sich an diesem anschließende Kolbenhülse 40a.2 auf, und die Kolbenhülse 40a.2 umschließt den Kolbenschaft 40b.2 vorzugsweise vollständig. Der Vorsprung 40a.3 befindet sich im Bereich des zweiten Kolbenbodens 40b.1, und er bildet mit dem am zweiten Kolbenboden 40b.1 ausgebildeten Rücksprung 40b.3 eine formschlüssige erste Mitnahmeverbindung. Der Formschluss zwischen dem Außen- und dem Innenkolben 40a, 40b wird durch einen von der ersten Mitnahmeverbindung axial beabstandeten Sicherungsring 29 vervollständigt, und die Abdichtung zwischen Außen- und Innenkolben 40a, 40b bewirkt eine zwischen Vor- und Rücksprung 40a.3, 40b.3 angeordnete dritte Dichtung 28. Die Zufuhr des Druckmittels D in die Druckmittelöffnung 18 erfolgt über ein Druckmittelanschlussteil 30.

Die wenigstens eine wendelförmige Nut 4.3a und die wenigstens eine axiale Nut 4.4a sind im zweiten Kolbenschaft 40b.2 ausgebildet. Die Kolbenhülse 40a.2 fungiert als Schutzhülse für den zweiten Kolbenschaft 40b.2 und bildet somit auch eine radiale Sicherung und Abschirmung für die Mitnehmerbolzen 12, 12* und ihre Kurvenführungs-Rollen 12a sowie die Geradführungs-Nocken 14 und ihre Geradführungs-Rollen 14a.

Zur Reduzierung der Teilevielfalt bei Anpassung der Betätigungsvorrichtung 1 an unterschiedliche große Antriebsdrehmomente sind Außenkolben 40a mit im Außendurchmesser unterschiedlich groß ausgeführten Kolbenringen 40a.1 vorgesehen, die jeweils mit Innenkolben 40b, die immer die selbe und einzige Maßgeometrie aufweisen, gefügt sind.

In der der zweiten Gehäusestirnfläche 2.3 zugewandten Stirnfläche des zweiten Kolbenbodens 40b.1 ist eine beispielsweise als Gewindegrundlochbohrung ausgebildete Befestigungsbohrung 40b.4 ausgebildet, die mehreren Zwecken dienen kann. Sie kann der Aufnahme eines Hubbegrenzungsteils dienen, mit dem beispielsweise ein beliebiger Hub voreinstellbar ist. Sie kann weiterhin der Verbindung mit einem Kolben eines sich an die Betätigungsvorrichtung 1 anschließenden sog. Stapelzylinders dienen, mit dem bei einem vorgegebenen Druck des Druckmittels D entsprechend der nunmehr vorgesehenen Gesamtkolbenflächen eine entsprechende Vergrößerung der axialen Antriebskraft generierbar ist. Sie kann schließlich auch der Verbindung mit einer Rückmeldeeinrichtung zur Erfassung der jeweiligen Stellung des zweiten Antriebskolbens 40 dienen. Eine Befestigungsbohrung der vorbeschriebenen Art kann beispielsweise auch im ersten Kolbenboden 4.1 des ersten Antriebskolbens 4 angeordnet werden.

In **Figur 5** ist eine bevorzugte radiale und axiale Lagerung der Antriebswelle 6 dargestellt. Zu diesem Zweck sind in der Lagerhülse 2.4 im Abstand voneinander das erste Lager 16.1 und das zweite Lager 16.2 zur radialen und zusätzlich auch zur axialen Lagerung (Axiallager 22) der Antriebswelle 6 vorgesehen. Diese Lagerung ist auch auf die erste Ausführungsform der Betätigungsvorrichtung 1 mit dem einteilig ausgeführten ersten Antriebskolben 4 übertragbar. Das dem jeweiligen Antriebskolben 4, 40 benachbarte zweite Lager 16.2 nimmt eine zu diesem orientierte Axialkraft und das erste Lager 16.1 nimmt eine entgegengesetzte Axialkraft, jeweils ausgeübt vorzugsweise von einer dem jeweiligen Lager 16.2, 16.1 zugeordneten Schulter der Antriebswelle 6, auf. Die Antriebswelle 6 ist im Bereich des ersten Lagers 16.1 gegenüber diesem mittels einer ersten Dichtung 26 und das erste Lager 16.1 ist gegenüber der Lagerhülse 2.4 mittels einer zweiten Dichtung 27 druckmitteldicht abgedichtet. Diese Abdichtung ist erforderlich, wenn anstelle der Rückstellfeder 8 der Antriebskolben 4, 40 durch rückwärtige Beaufschlagung mit einem Druckmittel D, d.h. durch Beaufschlagung des Raumes zwischen dem Antriebskolben 4, 40 und der ersten Gehäusestirnfläche 2.2, in seine Ruhe- oder Ausgangsstellung überführt wird. Bei Verwendung der Rückstellfeder 8 wird der vorg. Raum durch eine nicht bezeichnete Bohrung im Gehäusemantel 2.1 entlüftet.

### BEZUGSZEICHENLISTE DER VERWENDETEN ABKÜRZUNGEN

- 1: Betätigungsvorrichtung

- 2: Gehäuse
- 2.1: Gehäusemantel
- 2.2: erste Gehäusestirnfläche
- 2.3: zweite Gehäusestirnfläche

- 2.4: Lagerhülse
- 2.4a: Anschlagmittel (z.B. Umfangsnut)

- 4: erster Antriebskolben
- 4.1: erster Kolbenboden
- 4.2: erster Kolbenschaft

- 40: zweiter Antriebskolben

- 40a: Außenkolben
- 40a.1: Kolbenring
- 40a.2: Kolbenhülse
- 40a.3: Vorsprung

- 40b: Innenkolben
- 40b.1: zweiter Kolbenboden
- 40b.2: zweiter Kolbenschaft
- 40b.3: Rücksprung
- 40b.4: Befestigungsbohrung

- 4.3: Kurvenführung
- 4.3a: wendelförmige Nut

- 4.4: Geradführung
- 4.4a: axiale Nut

- 6: Antriebswelle
- 6.1: Mitnehmer-Ausnehmung
- 6.2: Querbohrung
- 6.3: stirnseitige Ausnehmung

- 8: Rückstellfeder
- (8): Rückstellfeder (innerhalb des Kolbenschaftes 4.2, 40b.2)

- 10: Kolbendichtung

- 12: Mitnehmerbolzen
- 12*: durchgehender Mitnehmerbolzen
- 12a: Kurvenführungs-Rolle

- 14: Geradführungs-Nocken
- 14a: Geradführungs-Rolle

- 16.1: erstes Lager
- 16.2: zweites Lager

- 18: Druckmittelöffnung
- 20: Mantelrohr
- 22: Axiallager

- 23: Laternengehäuse
- 23a: Laternenflansch

- 24: Gewindebolzen
- 25: Mutter
- 26: erste Dichtung
- 27: zweite Dichtung
- 28: dritte Dichtung
- 29: Sicherungsring
- 30: Druckmittelanschlussteil

- A: Drehachse
- D: Druckmittel (pneumatisch, hydraulisch)
- E: Anordnungsebene

- +h: positive Huborientierung
- -h: negative Huborientierung

- n: Drehbewegung

## Patentansprüche

1. Betätigungsvorrichtung (1) für einen drehbaren Verschlussteil eines Ventils, mit einem Gehäuse (2), in dem ein gegen einen zylindrischen Gehäusemantel (2.1) abgedichteter, einseitig mit einem Druckmittel (D) beaufschlagbarer Antriebskolben (4; 40) angeordnet ist, der einen Kolbenschaft (4.2; 40b.2) aufweist, mit einer Antriebswelle (6), die einseitig aus dem Gehäuse (2) herausgeführt ist und mittelbar oder unmittelbar den Verschlussteil drehend antreibt, wobei der Antriebskolben (4; 40) entweder bei einseitiger Beaufschlagung mit dem Druckmittel (D) eine axiale Verschiebebewegung gegen die Wirkung wenigstens einer Rückstellfeder (8) oder bei wechselseitiger Beaufschlagung mit einem Druckmittel eine hin- und hergehende Verschiebebewegung ausführt, wobei der Kolbenschaft (4.2; 40b.2) über wenigstens eine in ihm ausgebildete axiale Nut (4.4a), in die ein mit dem Gehäuse (2) fest verbundener Geradführungs-Nocken (14) eingreift, eine axial orientierte Führung in dem Gehäuse (2) erfährt und wobei der Kolbenschaft (4.2; 40b.2) wenigstens eine in ihm angeordnete wendelförmige Nut (4.3a) aufweist, in die ein an der Antriebswelle (6) fest angeordneter Mitnehmerbolzen (12; 12*) eingreift, sodass die radial und axial gelagerte Antriebswelle (6) durch die in Richtung ihrer Drehachse (A) orientierte axiale Verschiebebewegung des Antriebskolbens (4; 40) eine Drehung um die Drehachse (A) erfährt,
**dadurch gekennzeichnet,**
• **dass** die Antriebswelle (6) in einer in das Gehäuse (2) eingreifenden, mit diesem fest verbundenen und in diesem endenden Lagerhülse (2.4) zweiseitig radial gelagert ist,
• **dass** der Kolbenschaft (4.2; 40b.2) auf der äußeren Mantelfläche der Lagerhülse (2.4) axial verschieblich und radial gelagert ist,
• und **dass** der wenigstens eine Mitnehmerbolzen (12) durch in der Lagerhülse (2.4) vorgesehene Anschlagmittel (2.4a) eine hubunabhängige, unmittelbare Begrenzung seiner Drehbewegung um die Drehachse (A) erfährt.

2. Betätigungsvorrichtung nach Anspruch 1,
**dadurch gekennzeichnet,**
**dass** der Antriebskolben (40) wenigstens zweistückig ausgeführt und seine Teilung in wenigstens einer die Drehachse (A) konzentrisch umschließenden Mantelfläche eines Außenkolbens (40a) und eines Innenkolbens (40b) vorgesehen ist.

3. Betätigungsvorrichtung nach Anspruch 2,
**dadurch gekennzeichnet,**
**dass** der wenigstens eine Außenkolben (40a) und der wenigstens eine Innenkolben (40b) formschlüssig und lösbar miteinander verbunden sind.

4. Betätigungsvorrichtung nach Anspruch 2 oder 3,
**dadurch gekennzeichnet,**
**dass** der Innenkolben (40b) buchsenförmig mit einem zweiten Kolbenboden (40b.1) und einem sich an diesem anschließenden hülsenförmigen zweiten Kolbenschaft (40b.2) ausgeführt ist, dass der Außenkolben (40a) einen Kolbenring (40a.1) und eine sich an diesem anschließende Kolbenhülse (40a.2) aufweist, und dass die Kolbenhülse (40a.2) den Kolbenschaft (40b.2) vollständig umschließt.

5. Betätigungsvorrichtung nach einem der Ansprüche 2 bis 4,
**dadurch gekennzeichnet,**
**dass** der Außenkolben (40a) durch einen im Bereich des zweiten Kolbenbodens (40b.1) radial nach innen sich erstreckenden Vorsprung (40a.3) mit einem am zweiten Kolbenboden (40b,1) ausgebildeten Rücksprung (40b.3) eine erste Mitnahmeverbindung ausbildet.

6. Betätigungsvorrichtung nach Anspruch 4 oder 5,
**dadurch gekennzeichnet,**
**dass** die wenigstens eine wendelförmige Nut (4.3a) und die wenigstens eine axiale Nut (4.4a) im zweiten Kolbenschaft (40b.2) ausgebildet sind.

7. Betätigungsvorrichtung nach einem der Ansprüche 2 bis 6,
**dadurch gekennzeichnet,**
**dass** Außenkolben (40a) mit im Außendurchmesser unterschiedlich groß ausgeführten Kolbenringen (40a.1) mit Innenkolben (40b), die immer die selbe und einzige Maßgeometrie aufweisen, gefügt sind.

8. Betätigungsvorrichtung nach einem der vorhergehenden Ansprüche,
**dadurch gekennzeichnet,**
**dass** der wenigstens eine Geradführungs-Nocken (14) in oder an der Lagerhülse (2.4) befestigt ist.

9. Betätigungsvorrichtung nach einem der vorhergehenden Ansprüche,
**dadurch gekennzeichnet,**
**dass** zwei diametral zueinander angeordnete Geradführungs-Nocken (14) vorgesehen sind, von denen jeder in eine zugeordnete axiale Nut (4.4a) eingreift.

10. Betätigungsvorrichtung nach einem der vorhergehenden Ansprüche,
**dadurch gekennzeichnet,**
**dass** zwei diametral zueinander angeordnete wendelförmige Nuten (4.3a) im Kolbenschaft (4.2; 40b.2) vorgesehen sind, in die jeweils ein zugeordneter Mitnehmerbolzen (12) eingreift.

11. Betätigungsvorrichtung nach Anspruch 10,
**dadurch gekennzeichnet,**
**dass** die beiden Mitnehmerbolzen (12) zu einem einzigen, durchgehenden Mitnehmerbolzen (12*) zusammengeführt sind, der mit seinem jeweiligen Ende in eine der wendelförmigen Nuten (4.3a) eingreift.

12. Betätigungsvorrichtung nach einem der vorhergehenden Ansprüche,
**dadurch gekennzeichnet,**
**dass** der wenigstens eine Geradführungs-Nocken (14) und der wenigstens eine Mitnehmerbolzen (12; 12*) mit ihrer jeweiligen Längsachse in einer einzigen, senkrecht zur Drehachse (A) orientierten Anordnungsebene (E) angeordnet sind.

13. Betätigungsvorrichtung nach Anspruch 12,
**dadurch gekennzeichnet,**
**dass** die Anordnungsebene (E) durch einen dem Antriebskolben (4; 40) zugewandten endseitigen Bereich der Lagerhülse (2.4) verläuft.

14. Betätigungsvorrichtung nach einem der vorhergehenden Ansprüche,
**dadurch gekennzeichnet,**
**dass** das dem wenigstens einen Mitnehmerbolzen (12) zugeordnete Anschlagmittel (2.4a) in Form einer in der Lagerhülse (2.4) vorgesehenen, sich in deren Umfangsrichtung begrenzt erstreckenden Umfangsnut (2.4a) ausgebildet ist, an deren jeweiliger endseitiger Begrenzung der Mitnehmerbolzen (12) zur Anlage gelangt.

15. Betätigungsvorrichtung nach einem der Ansprüche 11 bis 13,
**dadurch gekennzeichnet,**
**dass** das dem einzigen Mitnehmerbolzen (12*) zugeordnete Anschlagmittel (2.4a) in Form von zwei diametral zueinander angeordneten, in der Lagerhülse (2.4) vorgesehenen, sich in deren Umfangsrichtung begrenzt erstreckenden Umfangsnuten (2.4a) ausgebildet ist, an deren jeweiliger endseitiger Begrenzung jeweils ein Ende des Mitnehmerbolzens (12*) zur Anlage gelangt.

16. Betätigungsvorrichtung nach Anspruch 14 oder 15,
**dadurch gekennzeichnet,**
**dass** die jeweilige Umfangsnut (2.4a) derart in Umfangsrichtung bemessen ist, dass die Umfangsnut (2.4a) unter Berücksichtigung der und im Zusammenwirken mit den relevanten Abmessungen des zugeordneten Mitnehmerbolzens (12; 12*) zwischen den begrenzten Drehbewegungs-Endlagen des Mitnehmerbolzens (12; 12*) einen Drehwinkel zulässt, der exakt einem Sollwert entspricht.

17. Betätigungsvorrichtung nach einem der vorhergehenden Ansprüche,
**dadurch gekennzeichnet,**
**dass** die jeweilige axiale Nut (4.4a) und/oder die jeweilige wendelförmige Nut (4.3a) zum freien Ende des Kolbenschaftes (4.2; 40b.2) hin offen ausgebildet ist.

18. Betätigungsvorrichtung nach einem der vorhergehenden Ansprüche,
**dadurch gekennzeichnet,**
**dass** in der Lagerhülse (2.4) im Abstand voneinander ein erstes Lager (16.1) und ein zweites Lager (16.2) zur radialen und axialen Lagerung der Antriebswelle (6) vorgesehen sind, wobei das dem Antriebskolben (4; 40) benachbarte zweite Lager (16.2) eine zu diesem orientierte Axialkraft und das erste Lager (16.1) eine entgegengesetzte Axialkraft, jeweils ausgeübt von der Antriebswelle (6), aufnehmen.

19. Betätigungsvorrichtung nach einem der Ansprüche 1, 8 bis 10, 12 bis 14 oder 16 bis 18,
**dadurch gekennzeichnet,**
**dass** die wenigstens eine Rückstellfeder (8) einerseits innerhalb des ersten Kolbenschaftes (4.2) angeordnet ist und ihre axiale Abstützung an einem ersten Kolbenboden (4.1) des ersten Antriebskolbens (4) findet, und dass andererseits in einer stirnseitigen Ausnehmung (6.3) in der Antriebswelle (6) die Aufnahme und axiale Abstützung der wenigstens einen Rückstellfeder (8) vorgesehen ist.

20. Betätigungsvorrichtung nach Anspruch 19,
**dadurch gekennzeichnet,**
**dass** die Rückstellfeder (8) in Längsrichtung zweigeteilt ausgeführt ist und ihre benachbarten Enden in einem Zwischenstück Aufnahme finden, das in der stirnseitigen Ausnehmung (6.3) axial verschieblich geführt ist.

21. Betätigungsvorrichtung nach einem der vorhergehenden Ansprüche,
**dadurch gekennzeichnet,**
**dass** die Betätigungsvorrichtung (1) als ein pneumatisch oder hydraulisch betätigbarer Drehantrieb für ein Scheiben- oder Drosselklappenventil fungiert.

## Claims

1. An actuating device (1) for a rotatable closure part of a valve, with a housing (2), in which a drive piston (4; 40) sealed against a cylindrical housing shell (2.1) and pressurizable on one side with a pressurizing medium (D) is arranged, which has a piston shaft (4.2; 40b.2), with a drive shaft (6), which is guided out of the housing (2) on one side and drives the closure part in a rotating manner indirectly or directly, wherein the drive piston (4; 40) executes either in the case of one-sided pressurization with the pressurizing medium (D) an axial shift motion against the effect of at least one return spring (8) or in the case of two-sided pressurization with a pressurizing medium executes a back and forth shift motion, wherein the piston shaft (4.2; 40b.2) experiences an axially oriented guidance in the housing (2) via at least one axial groove (4.4a) designed in it, into which a straight guiding cam (14) permanently connected with the housing (2) engages and wherein the piston shaft (4.2; 40b.2) has at least one helical groove (4.3a) arranged in it, into which a driving pin (12; 12*) permanently arranged on the drive shaft (6) engages, so that the radially and axially mounted drive shaft (6) experiences a rotation around the axis of rotation (A) through the axial shift motion of the drive piston (4; 40) oriented in the direction of its axis of rotation (A),
**characterized in that**
• the drive shaft (6) is radially mounted on two sides in a bearing sleeve (2.4) engaging in the housing (2), permanently connected with it and ending in it,
• the piston shaft (4.2; 40b.2) is axially displaceable and radially mounted on the outer shell surface of the bearing sleeve (2.4),
• and **in that** the at least one driving pin (12) experiences a stroke-independent, direct restriction of its rotational movement around the axis of rotation (A) through stop means (2.4a) provided in the bearing sleeve (2.4).

2. The actuating device according to claim 1,
**characterized in that**
the drive piston (40) is designed in at least two parts and its division is provided in at least one shell surface of an outer piston (40a) and of an inner piston (40b) surrounding the axis of rotation (A) concentrically.

3. The actuating device according to claim 2,
**characterized in that**
the at least one outer piston (40a) and the at least one inner piston (40b) are interconnected in a form-fitting and releasable manner.

4. The actuating device according to claim 2 or 3,
**characterized in that**
the inner piston (40b) is designed in a bushing-like manner with a second piston bottom (40b.1) and a sleeve-like second piston shaft (40b.2) connecting to it, that the outer piston (40a) has a piston ring (40a.1) and a piston sleeve (40a.2) connecting to it and that the piston sleeve (40a.2) completely surrounds the piston shaft (40b.2).

5. The actuating device according to one of claims 2 to 4,
**characterized in that**
the outer piston (40a) forms a first drive connection with an offset (40b.3) designed on the second piston bottom (40b.1) through a projection (40a.3) extending radially inwards in the area of the second piston bottom (40b.1).

6. The actuating device according to claim 4 or 5,
**characterized in that**
the at least one helical groove (4.3a) and the at least one axial groove (4.4a) are designed in the second piston shaft (40b.2).

7. The actuating device according to one of claims 2 to 6,
**characterized in that**
outer pistons (40a) with piston rings (40a.1) designed with different outer diameters are joined with inner pistons (40b), which always have the one and the same dimension geometry.

8. The actuating device according to one of the previous claims,
**characterized in that**
the at least one straight guiding cam (14) is fastened in or on the bearing sleeve (2.4).

9. The actuating device according to one of the previous claims,
**characterized in that**
two straight guiding cams (14) arranged diametrically to each other are provided, each of which engages in an associated axial groove (4.4a).

10. The actuating device according to one of the previous claims,
**characterized in that**
two helical grooves (4.3a) arranged diametrically to each other are provided in the piston shaft (4.2; 40b.2), into each of which an associated driving pin (12) engages.

11. The actuating device according to claim 10,
**characterized in that**
the two driving pins (12) are combined into a single, continuous driving pin (12*), which engages in one of the helical grooves (4.3a) with its respective end.

12. The actuating device according to one of the previous claims,
**characterized in that**
the at least one straight guiding cam (14) and the at least one driving pin (12; 12*) are arranged with their respective longitudinal axis in a single arrangement plane (E) oriented perpendicular to the axis of rotation (A).

13. The actuating device according to claim 12,
**characterized in that**
the arrangement plane (E) runs through an end-side area of the bearing sleeve (2.4) facing the drive piston (4; 40).

14. The actuating device according to one of the previous claims,
**characterized in that**
the stop means (2.4a) assigned to the at least one driving pin (12) is designed in the form of a circumferential groove (2.4a) provided in the bearing sleeve (2.4) and extending in a restricted manner in its circumferential direction, on the respective end-side restriction of which the driving pin (12) comes to rest.

15. The actuating device according to one of the claims 11 to 13,
**characterized in that**
the stop means (2.4a) assigned to the single driving pin (12*) is designed in the form of two circumferential grooves (2.4a) arranged diametrically to each other, provided in the bearing sleeve (2.4) and extending in a restricted manner in its circumferential direction, on the respective end-side restriction of which respectively one end of the driving pin (12*) comes to rest.

16. The actuating device according to claim 14 or 15,
**characterized in that**
the respective circumferential groove (2.4a) is measured in the circumferential direction such that the circumferential groove (2.4a) permits an angle of rotation exactly matching a target value taking into account and in connection with the relevant dimensions of the associated driving pin (12; 12*) between the restricted rotary-movement end positions of the driving pin (12; 12*).

17. The actuating device according to one of the previous claims,
**characterized in that**
the respective axial groove (4.4a) and/or the respective helical groove (4.3a) is designed open towards the free end of the piston shaft (4.2; 40b.2).

18. The actuating device according to one of the previous claims,
**characterized in that**
a first bearing (16.1) and a second bearing (16.2) are provided for the radial and axial mounting of the drive shaft (6) in the bearing sleeve (2.4) at a distance from each other, wherein the second bearing (16.2) next to the drive piston (4; 40) receives an axial force oriented towards it and the first bearing (16.1) an opposite axial force, respectively exerted by the drive shaft (6).

19. The actuating device according to one of claims 1, 8 to 10, 12 to 14 or 16 to 18,
**characterized in that**
the at least one return spring (8) is arranged on one hand within the first piston shaft (4.2) and its axial support is located on a first piston bottom (4.1) of the first drive piston (4) and **in that** on the other hand the receiver and axial support of the at least one return spring (8) is provided in a front-side recess (6.3) in the drive shaft (6).

20. The actuating device according to claim 19,
**characterized in that**
the return spring (8) is designed in two parts in the longitudinal direction and its neighboring ends are located in an intermediate piece, which is guided in an axially shiftable manner in the front-side recess (6.3).

21. The actuating device according to one of the previous claims,
**characterized in that**
the actuating device (1) functions as a pneumatically or hydraulically actuatable rotary drive for a disk or throttle valve.

## Revendications

1. Dispositif d'actionnement (1) pour un élément de fermeture rotative d'une vanne, avec un boîtier (2) dans lequel est agencé un piston d'entraînement (4 ; 40) rendu étanche par rapport à une enveloppe de boîtier (2.1) cylindrique et susceptible d'être sollicité d'un côté par un fluide sous pression (D), lequel présente une tige de piston (4.2 ; 40b.2), avec un arbre d'entraînement (6) faisant saillie d'un côté hors du boîtier (2) et entraînant indirectement ou directement l'élément de fermeture de façon rotative, le piston d'entraînement (4 ; 40) effectuant soit un mouvement de déplacement axial contre l'action d'au moins un ressort de rappel (8) en cas de sollicitation unilatérale avec le fluide sous pression (D), ou un mouvement de déplacement alternatif en cas de sollicitation alternée avec un fluide sous pression, la tige de piston (4.2 ; 40b.2) subissant un guidage orienté axialement dans le boîtier (2) par le biais d'au moins une rainure axiale (4.4a) formée dans celui-ci, dans laquelle s'engage une came de guidage linéaire (14) reliée fixement au boîtier (2), et la tige de piston (4.2 ; 40b.2) présentant au moins une rainure hélicoïdale (4.3a) agencée sur celle-ci, dans laquelle s'engage un goujon d'entraînement (12; 12*) agencé fixement sur l'arbre d'entraînement (6), de telle façon que l'arbre d'entraînement (6) monté radialement et axialement subit une rotation autour de l'axe (A) sous l'effet du mouvement de déplacement axial du piston d'entraînement (4 ; 40), orienté dans la direction de son axe de rotation (A) **caractérisé en ce que**
• l'arbre d'entraînement (6) est monté radialement des deux côtés dans une douille de palier (2.4) engagée dans le boîtier (2), reliée fixement à celui-ci et finissant dans celui-ci,
• **en ce que** la tige de piston (4.2 ; 40b.2) est montée radialement et de façon axialement déplaçable sur la surface d'enveloppe extérieure de la douille de palier (2.4),
• et **en ce que** l'au moins un goujon d'entraînement (12) subit une limitation, directe et indépendante de la course, de son mouvement de rotation autour de l'axe de rotation (A) par des moyens de butée (2.4a) prévus dans la douille de palier (2.4).

2. Dispositif d'actionnement selon la revendication 1,
**caractérisé en ce que**
le piston d'entraînement (40) est constitué d'au moins deux pièces, et sa division est prévue dans au moins une surface d'enveloppe d'un piston extérieur (40a) et d'un piston intérieur (40b) entourant concentriquement l'axe de rotation (A).

3. Dispositif d'actionnement selon la revendication 2,
**caractérisé en ce que**
l'au moins un piston extérieur (40a) et l'au moins un piston intérieur (40b) sont reliés entre eux par complémentarité de forme et de façon détachable.

4. Dispositif d'actionnement selon la revendication 2 ou 3,
**caractérisé en ce que**
le piston intérieur (40b) est conçu en forme de manchon, avec un deuxième fond de piston (40b.1) et une deuxième tige de piston (40b.2) en forme de douille se raccordant à celui-ci, **en ce que** le piston extérieur (40a) présente un segment de piston (40a.1) et une douille de piston (40a.2) se raccordant à celui-ci, et **en ce que** la douille de piston (40a.2) entoure entièrement la tige de piston (40b.2).

5. Dispositif d'actionnement selon l'une des revendications 2 à 4,
**caractérisé en ce que**
le piston extérieur (40a) forme une première liaison d'entraînement, au moyen d'une saillie (40a.3) s'étendant radialement vers l'intérieur dans la région du deuxième fond de piston (40b.1) avec un retrait (40b.3) formé sur le deuxième fond de piston (40b.1).

6. Dispositif d'actionnement selon la revendication 4 ou 5,
**caractérisé en ce que**
l'au moins une rainure hélicoïdale (4.3a) et l'au moins une rainure axiale (4.4a) sont formées dans la deuxième tige de piston (40b.2).

7. Dispositif d'actionnement selon l'une des revendications 2 à 6,
**caractérisé en ce que**
des pistons extérieurs (40a) avec des segments de piston (40a.1) présentant des diamètres de différentes tailles sont dotés de pistons intérieurs (40b) présentant toujours une seule et même géométrie dimensionnelle.

8. Dispositif d'actionnement selon l'une des revendications précédentes,
**caractérisé en ce que**
l'au moins une came de guidage linéaire (14) est fixé dans ou sur la douille de palier (2.4).

9. Dispositif d'actionnement selon l'une des revendications précédentes,
**caractérisé en ce que**
il est prévu deux cames de guidage linéaire (14) agencées diamétralement l'une par rapport à l'autre, lesquelles s'engagent respectivement dans une rainure axiale (4.4a) correspondante.

10. Dispositif d'actionnement selon l'une des revendications précédentes,
**caractérisé en ce que**
il est prévu deux rainures hélicoïdales (4.3a) agencées diamétralement l'une par rapport à l'autre dans la tige de piston (4.2 ; 40b.2), dans lesquelles s'engage respectivement un goujon d'entraînement (12) correspondant.

11. Dispositif d'actionnement selon la revendication 10,
**caractérisé en ce que**
les deux goujons d'entraînement (12) sont réunis en un seul goujon d'entraînement (12*) continu, lequel s'engage avec son extrémité respective dans l'une des rainures hélicoïdales (4.3a).

12. Dispositif d'actionnement selon l'une des revendications précédentes,
**caractérisé en ce que**
l'au moins une came de guidage linéaire (14) et l'au moins un goujon d'entraînement (12; 12*) sont agencés avec leur axe longitudinal respectif dans un seul plan d'agencement (E) orienté perpendiculairement à l'axe de rotation (A).

13. Dispositif d'actionnement selon la revendication 12,
**caractérisé en ce que**
le plan d'agencement (E) s'étend à travers une région d'extrémité de la douille de palier (2.4) qui est tournée vers le piston d'entraînement (4 ; 40).

14. Dispositif d'actionnement selon l'une des revendications précédentes,
**caractérisé en ce que**
le moyen de butée (2.4a) attribué à l'au moins un goujon d'entraînement (12) est conçu sous la forme d'une rainure périphérique (2.4a) prévue dans la douille de palier (2.4) et s'étendant de façon limitée dans la direction périphérique de celle-ci, le goujon d'entraînement (12) butant contre sa délimitation finale respective.

15. Dispositif d'actionnement selon l'une des revendications 11 à 13,
**caractérisé en ce que**
le moyen de butée (2.4a) attribué au goujon d'entraînement unique (12*) est conçu sous la forme de deux rainures périphériques (2.4a) agencées diamétralement l'une par rapport à l'autre, prévues dans la douille de palier (2.4) et s'étendant de façon limitée dans la direction périphérique de celle-ci, une extrémité du goujon d'entraînement (12*) butant respectivement contre leur délimitation finale respective.

16. Dispositif d'actionnement selon la revendication 14 ou 15,
**caractérisé en ce que**
la rainure périphérique (2.4a) respective est dimensionnée de telle façon dans la direction périphérique, que la rainure périphérique (2.4a) permet un angle de rotation correspondant exactement à une valeur théorique, en tenant compte des dimensions concernées du goujon d'entraînement (12 ; 12*) correspondant entre les positions finales limitées du mouvement de rotation du goujon d'entraînement (12; 12*), et en coopération avec celles-ci.

17. Dispositif d'actionnement selon l'une des revendications précédentes,
**caractérisé en ce que**
la rainure axiale (4.4a) respective et/ou la rainure hélicoïdale (4.3a) respective est conçue ouverte vers l'extrémité libre de la tige de piston (4.2 ; 40b.2).

18. Dispositif d'actionnement selon l'une des revendications précédentes,
**caractérisé en ce que**
dans la douille de palier (2.4), il est prévu un premier palier (16.1) et un deuxième palier (16.2) espacés l'un de l'autre, pour le support radial et axial de l'arbre d'entraînement (6), le deuxième palier (16.2) adjacent au piston d'entraînement (4 ; 40) recevant une force axiale orientée vers celui-ci, et le premier palier (16.1) recevant une force axiale opposée, respectivement exercée par l'arbre d'entraînement (6).

19. Dispositif d'actionnement selon l'une des revendications 1, 8 à 10, 12 à 14 ou 16 à 18,
**caractérisé en ce que**
l'au moins un ressort de rappel (8) est agencé d'une part à l'intérieur de la première tige de piston (4.2) et trouve son appui axial sur un premier fond de piston (4.1) du premier piston d'entraînement (4), et **en ce que** d'autre part, le logement et le support axial de l'au moins un ressort de rappel (8) sont prévus dans un évidement frontal (6.3) dans l'arbre d'entraînement (6).

20. Dispositif d'actionnement selon la revendication 19,
**caractérisé en ce que**
le ressort de rappel (8) est conçu en deux parties dans la direction longitudinale, et ses extrémités adjacentes sont reçues dans une pièce intermédiaire qui est guidée de façon axialement déplaçable dans l'évidement frontal (6.3).

21. Dispositif d'actionnement selon l'une des revendications précédentes,
**caractérisé en ce que**
le dispositif d'actionnement (1) fonctionne comme un entraînement rotatif à actionnement pneumatique ou hydraulique, pour une vanne-papillon ou une vanne à disque.
